# EUROPÄISCHE PATENTSCHRIFT

(11) **EP 0 845 129 B1**
(45) Veröffentlichungstag und Bekanntmachung des Hinweises auf die Patenterteilung: **27.01.1999**
(21) Anmeldenummer: 96917358.2
(22) Anmeldetag: 12.06.1996
(51) Int. Cl.: G06K 19/077

(54) **PCMCIA MODUL**
PCMCIA MODULE
MODULE PCMCIA

(30) Priorität: 18.08.1995 DE 19530363
(43) Veröffentlichungstag der Anmeldung: 03.06.1998
(73) Patentinhaber: Deutsche Telekom AG, 53113 Bonn (DE)
(72) Erfinder: KOWALSKI, Bernd, D-57072 Siegen (DE)
(74) Vertreter: Kampfenkel, Klaus, Dipl.-Ing.
(86) Internationale Anmeldenummer: DE9601074
(87) Internationale Veröffentlichungsnummer: WO9707480

(56) Entgegenhaltungen:
- EP-A- 0 552 078
- FR-A- 2 701 133
- US-A- 4 797 542

## Beschreibung

Die Erfindung bezieht sich auf einen Modul der im Oberbegriff des Patentanspruchs 1 näher definierten Art. Ein solcher Modul wird z. B. unter der Bezeichnung PCMCIA (Personal Computer Memory Card International Association) angeboten und ist in Funkschau 2/1994 Seiten 76 bis 79 von Fereydun Khanide in "GUTE KARTEN FÜR DIE ZUKUNFT" näher beschrieben.

Derartige Module sind als zusätzliche PC-Card konzipiert, mit welchen dessen Anwendungsbereiche erweiterbar sind. Für manche Anwendungen ist es erforderlich, bzw. wenigstens ratsam, einen solchen Modul zu personalisieren. Dies erfordert jedoch eine aufwendige Prozedur, die sich preiserhöhend auswirkt.

Es ist andererseits bekannt, daß die Prozessorchipkarte als individuelles elektronisches Schlüsselmittel zunehmend eingesetzt und dazu auch personalisiert wird. Aufgrund ihrer äußeren Abmessungen und die Art ihrer elektrischen Kontaktierung ist sie heute das dominierende Medium in diesem Anwendungsbereich.

Folgende Eigenschaften der Chipkarte sind hierfür entscheidend:
1. genormte äußere Abmessungen, mechanische Eigenschaften und Schnittstelle,
2. platzsparende Lagerung (stapelbar)
3. einfacher Transport durch den Benutzer,
4. (unsichtbares) Tragen am Körper des Benutzers,
5. viele Steckzyklen an unterschiedlichen Endgeräten und
6. rationelles mechanisch-elektrisches Processing auch für große Stückzahlen beim Laden der individuellen Schlüsselmittel oder anderer Daten im Zuge des Produktionsvorganges (im folgenden als "Personalisierung" bezeichnet).

Allerdings hat die Prozessorchipkarte einen schwerwiegenden Nachteil: aufgrund der mechanischen Vorgaben des ISO Standards ISO 7816 hinsichtlich ihrer Biegefähigkeit, Dicke und Schnittstelle ist die Größe ihres Halbleiterchips auf ca. 25 mm² begrenzt. Dadurch ist die Prozessorleistung der Chipkarte sehr stark begrenzt und macht sie für den Einsatz einer Vielzahl von Anwendungen, wie z. B. der schnellen Verschlüsselung von Daten, ungeeignet.

Als Alternative zur Chipkarte bietet sich z. B. das PCMCIA-Modul an. Es hat bis auf seine Dicke die gleichen äußeren Abmessungen wie eine Chipkarte. Die Dicke kann - z. B. mit Gehäusetyp I oder II (max. Dicke = 3,5 mm) - so gewählt werden, daß eine komplette Mikroprozessorarchitektur untergebracht werden kann. Die vielpolige Schnittstelle zur Außenwelt erlaubt Datentransferraten von bis zu 30 Mbit/s im Gegensatz zu ca. 10 kbit/s bei der Chipkarte.

Von den 6 o. g. hervorragenden Eigenschaften der Chipkarte erfüllt das PCMCIA-Modul die ersten 5 Eigenschaften und ist damit beinahe eine geradezu ideale Alternative für die Chipkarte.

Die vielpolige Schnittstelle des PCMCIA erlaubt zwar hohe Verarbeitungsgeschwindigkeiten im laufenden Betrieb, sie ist jedoch im Vergleich zur Chipkarten in folgenden Punkten von großem Nachteil:
a. erhöhter mechanischer Verschleiß durch komplizierte Steckkontakte, dadurch weniger Steckzyklen,
b. Verschmutzungsgefahr der Schnittstellenkontakte, dadurch Bedarf einer Schutztasche beim Transport am Körper,
c. aufwendige mechanische Führung und Kontaktierung beim Personalisierungsvorgang - dadurch läßt sich dieser Arbeitsprozeß nur mit hohem Aufwand automatisieren,
d. Mitbenutzung von herkömmlichen Chipkarten-Personalisierungsanlagen für PCMCIA-Module ist nicht möglich.

Aus der EP-A-0 552 078 ist eine PCMCIA-Chipkarte offenbart, auf die eine ISO-Chipkarte aufsetzbar ist. Die ISO-Chipkarte ist personalisierbar und derart ausgebildet, daß sie mit der PCMCIA-Chipkarte Daten austauschen kann. Dazu sind sowohl auf der PCMCIA-Chipkarte als auch auf der ISO-Chipkarte entsprechende Kontakte vorgesehen. Nur wenn die personalisierte ISO-Chipkarte auf der PCMCIA-Chipkarte aufgesetzt ist und mit dieser in Kontakt steht, kann ein Zugriff auf die PCMCIA-Chipkarte erfolgen. Ein wesentlicher Nachteil dieser Kartenkombination ist darin zu sehen, daß eine separate personalisierte ISO-Chipkarte benötigt wird, um einen Zugriff zu der PCMCIA-Chipkarte zu erhalten.

Aufgabe der Erfindung ist es daher, die aufgeführten Nachteile zu beseitigen.

Diese Aufgabe löst die Erfindung mit den Merkmalen des Anspruchs 1.

Vorteilhafte Weiterbildungen der Erfindung sind in den Kennzeichen der Unteransprüche 2 bis 4 aufgeführt.

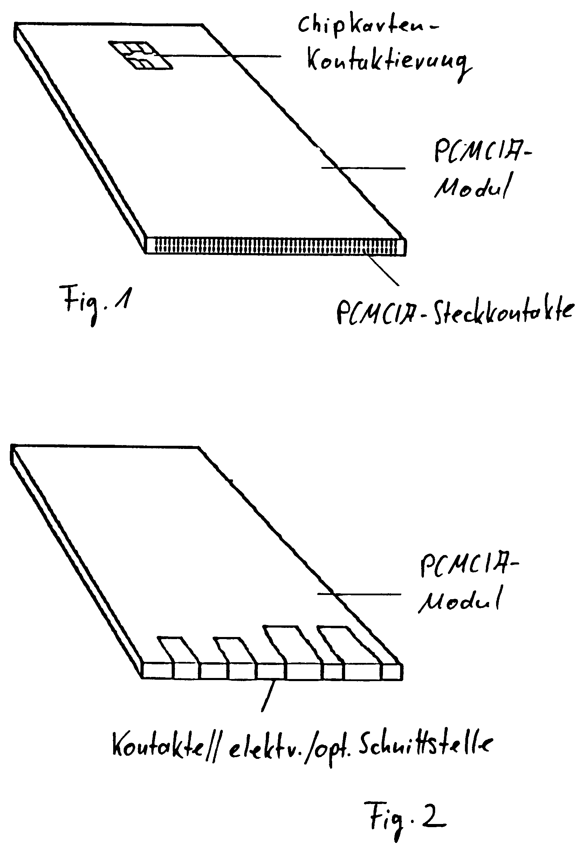

Die Erfindung wird nachfolgend anhand von Ausführungsbeispielen näher erläutert. In der zugehörigen Zeichnung zeigt
- Fig. 1: das Aufbringen von Chipkartenkontakten und
- Fig. 2: das Aufbringen von elektrischen bzw. kombiniert elektrischen/optischen Kontakten.

Das wesentliche Merkmal der Erfindung besteht in dem Vorschlag, entweder alternativ oder zusätzlich eine andere Schnittstelle im PCMCIA-Modul einzubauen. Hierfür bieten sich mehrere Möglichkeiten an. Die wichtigste davon ist die meistens benutzte Chipkartenschnittstelle nach ISO 7816 ff entsprechend Bild 1.

Im Falle einer zusätzlichen Chipkartenschnittstelle bleiben die Eigenschaften des PCMCIA-Moduls unverändert erhalten und der Modul erhält zusätzlich die Eigenschaften einer Chipkarte.

Die Nutzung der Chipkartenschnittstelle kann dabei auf den Personalisierungsvorgang eingeschränkt werden, weil sie ja nicht den für den "Normalbetrieb" üblicherweise erforderlichen vollen Funktionsumfang einer PCMCIA-Schnittstelle bieten kann.

Die Chipkartenschnittstelle bietet über eine Stromversorgungsmöglichkeit zumindest für einen Teil der inneren Schaltung des PCMCIA, z. B. für denjenigen Teil, welcher für den Personalisierungsvorgang erforderlich ist.

Ist der Personalisierungsvorgang aus Sicherheitsgründen kritisch, so kann ein programmgesteuerter Schutzmechanismus so eingebaut (programmiert) werden, daß die Nutzung der Chipkartenschnittstelle zur Personalisierung nur genau einmal - nämlich beim Personalisieren - erlaubt wird.

Es ist jedoch auch denkbar, die Chipkartenschnittstelle des PCMCIA-Moduls auch im "Normalbetrieb" zu nutzen. Dies ist immer dann sinnvoll, wenn nicht die vollen Eigenschaften des PCMCIA-Moduls erforderlich sind oder am Endgerät nur eine Chipkartenschnittstelle zur Verfügung steht. Allerdings ist in diesem Fall eine mechanische Veränderung der Einführungsschächte von Chipkartenterminals hinsichtlich der unterschiedlichen Dicke des PCMCIA-Moduls im Vergleich zur Chipkarte erforderlich.

Vorhandene Personalisierungsanlagen für Chipkarten können auf einfache Weise umgerüstet werden. Dort können PCMCIA-Module praktisch genauso einfach und schnell personalisiert und ggf. verpackt werden, wie dies schon bei Chipkarten möglich ist.

Das hier Gesagte gilt natürlich auch im Falle der Verwendung einer kontaktlosen Chipkartenschnittstelle nach ISO 7816-8.

Im Falle der Verwendung einer analog ISO 7816 ff modifizierten anderen elektrischen bzw. kombinierten elektrisch-optischen Schnittstelle ist zwar der Aufwand für eine dann auch nötige Modifikation vorhandener Personalisierungsanlagen größer als im Falle der Verwendung einer herkömmlichen Chipkartenschnittstelle. Für den "Normalbetrieb" lassen sich jedoch hohe Verarbeitungsgeschwindigkeiten erreichen, welche mit der Chipkartenschnittstelle nicht moglich wären.

Außerdem sind auch andere Lösungen denkbar, z. B. eine andere elektrische Schnittstelle bzw. die Kombination von 2 elektrischen Kontakten für die Stromversorgung und einer optischen Schnittstelle für die (schnelle) Kommunikation entsprechend Bild 2 oder induktiven Schnittstellen.

## Patentansprüche

1. PC-Karte, insbesondere eine PCMCIA-Karte, mit
einem Mikroprozessor,
wenigstens einem Speicher
und einer Steckverbindung,
**kennzeichnet durch**
eine Chipkartenschnittstelle, die im wesentlichen analog der Norm ISO 7816 ff implementiert ist und über die die PC-Karte personalisierbar ist.

2. PC-Karte nach Patentanspruch 1, dadurch gekennzeichnet, daß die Chipkartenschnittstelle kontaktlos und/oder mit Kontakten versehen ausgeführt und zusätzlich zu einer üblichen PCMCIA-Schnittstelle angebracht ist, wobei die Schnittstelle für Chipkarten-Anwendungen und die PCMCIA-Schnittstelle für übliche PCMCIA-Schnitstellen-Anwendungen ausgebildet ist.

3. PC-Karte nach Patentanspruch 1 oder 2, dadurch gekennzeichnet, daß die Chipkartenschnittstelle für nur einmalige Verwendung beim personalisieren ausgelegt ist, und daß danach nur die PCMCIA-Schnittstelle für eine Verwendung mit elektronischem Schlüssel anwendbar ist.

4. PC-Karte nach Patentanspruch 1, dadurch gekennzeichnet, daß die Chipkartenschnittstelle als Modifikation der ISO 7816 ff mit zwei elektrischen Kontakten für die Stromversorgung und sonst kontaktlos mit einer optischen bzw. induktiven Schnittstelle für die Kommunikation ausgeführt ist, und sowohl als Chipkartenschnittstelle als auch als PCMCIA Schnittstelle anwendbar ist.

## Claims

1. PC card, especially a PCMCIA-card comprising a microprocessor,
at least one memory, and one connector,
characterized by
one chipcard interface, which is substantially implemented analogous to the ISO 7816 ff. standard and through which the PC card is personalizable.

2. PC card according to claim 1,
characterized in that
the chipcard interface is accomplished contactless and/or provided with contacts and additionally arranged to a common PCMCIA-Interface, whereby the interface is adapted to chipcard applications and the PCMCIA-Interface is adapted to common PCMCIA applications.

3. PC card according to claim 1 or 2,
characterized in that
the chipcard interface is adapted to only a single use when personalizing, and that afterwards only the PCMCIA-Interface is applicable for use with an electronic key.

4. PC card according to claim 1,
characterized in that
the chipcard interface is realized as a modification of ISO 7816 ff. having two electrical contacts for power supply, where the chipcard interface is otherwise realised contactless having an optical or an inductive interface for communication and applicable for a chipcard interface as well as for a PCMCIA-Interface.

## Revendications

1. Carte PC, notamment carte PCMCIA, comprenant un microprocesseur, au moins une mémoire et un connecteur, caractérisée par une interface carte à puce qui est mise en oeuvre globalement selon la norme ISO 7816 ff et par l'intermédiaire de laquelle la carte PC peut être personnalisée.

2. Carte PC selon la revendication 1, caractérisée en ce que la carte à puce est sans contact et/ou munie de contacts et est installée en plus d'une interface PCMCIA habituelle, l'interface étant conçue pour des applications avec carte à puce et l'interface PCMCIA étant conçue pour des applications d'interface PCMCIA habituelles.

3. Carte PC selon la revendication 1 ou 2, caractérisée en ce que l'interface carte à puce est conçue pour une seule utilisation lors de la personnalisation et ensuite seule l'interface PCMCIA peut être exploitée pour une utilisation avec clé électronique.

4. Carte PC selon la revendication 1, caractérisée en ce que l'interface carte à puce est conçue comme une modification de la norme ISO 7816 ff avec deux contacts électriques pour l'alimentation en courant et sinon sans contact avec une interface optique ou inductive pour la communication et en ce qu'elle peut être exploitée aussi bien comme interface carte à puce que comme interface PCMCIA.
